# EUROPÄISCHE PATENTSCHRIFT

(11) **EP 4 417 553 B1**
(45) Veröffentlichungstag und Bekanntmachung des Hinweises auf die Patenterteilung: **11.11.2026**
(21) Anmeldenummer: 24157323.7
(22) Anmeldetag: 13.02.2024
(51) Int. Cl.: B65G 47/51, B65B 35/04, B65G 57/00, B65G 57/11, B65G 59/06, B65G 60/00, B65G 57/18

(54) **VORRICHTUNG ZUM LEGEN VON LATTEN**
DEVICE FOR LAYING SLATS
DISPOSITIF DE POSE DE LATTES

(30) Priorität: 14.02.2023 AT 5002023 U
(43) Veröffentlichungstag der Anmeldung: 21.08.2024
(73) Patentinhaber: TEAM CONSTRUCT Maschinenbau Gesellschaft m.b.H., 9300 St. Veit an der Glan (AT)
(72) Erfinder: RAINER, Georg, 9314 Launsdorf (AT)
(74) Vertreter: Beer & Partner Patentanwälte KG

(56) Entgegenhaltungen:
- WO-A1-00/78652
- US-A- 1 796 575
- US-A- 4 801 233
- US-A- 4 810 152
- US-A- 4 822 231
- US-A- 6 065 927
- US-A1- 2002 159 875

## Beschreibung

Die Erfindung betrifft eine Vorrichtung mit den Merkmalen des einleitenden Teils von Anspruch 1.

In Schnittholzsortieranlagen (Paketieranlagen) wird Schnittholz, wie Bretter, sortiert und dann zu Paketen zusammengelegt. Um zwischen den Lagen aus Schnittholz den Ein- und Durchtritt von Luft zu ermöglichen, damit das Trocknen des Schnittholzes in Trockenkammern oder auf Freiflächen erfolgen kann, werden Latten (Stapellatten oder Trockenkammerlatten) zwischen die Lagen aus Schnittholz eingelegt. Diese Latten werden entfernt, sobald das Trocknen des Schnittholzes abgeschlossen ist.

Um Latten auf Lagen aus Schnittholz abzulegen, werden in (automatisierten) Schnittholzsortieranlagen Lattenmagazine verwendet, die Latten an vorgesehenen Stellen auf Lagen aus Schnittholz ablegen. Damit das Ablegen von Latten an den hiefür vorgesehenen Stellen der Lagen aus Schnittholz erfolgt, werden die Lattenmagazine in die erforderliche Position verstellt. In bestimmten Ausführungsformen sind an der Oberseite der Lattenmagazine Förderbahnen vorgesehen, auf denen die abzulegenden Latten, beispielsweise von einem Sortierförderer, herangefördert werden, um sie in den Lattenkanal jedes Lattenmagazins einzuführen.

Wegen des Verstellens der Lattenmagazine kann es vorkommen, dass zwischen einander benachbarten Lattenmagazinen und - falls auf den Lattenmagazinen Förderbahnen vorgesehen sind - zwischen den Förderbahnen ein Abstand (Freiraum) vorliegt. Dies stellt ein Problem dar, wenn Latten von einem Sortierförderer - auf den Förderbahnen aufliegend - zu Lattenmagazinen geschoben werden. Die Latten können dann nicht zu nachgeordneten Lattenmagazinen bewegt werden, weil Latten durch die Freiräume nach unten fallen würden.

Auch bei Vorrichtungen mit Lattenmagazinen ohne Förderbahnen stellen Freiräume zwischen einander benachbarten Lattenmagazinen insofern ein Problem dar, als das Einführen von Latten in die Lattenkanäle der Lattenmagazine mit hoher Aufmerksamkeit durchgeführt werden muss, um zu vermeiden, dass Latten zwischen Lattenmagazinen unkontrolliert nach unten fallen.

Aus WO 00/78652 A1 ist eine Vorrichtung zum Legen von Latten bekannt. Die bekannte Vorrichtung zum Legen von Latten hat wenigstens zwei Lattenmagazine, wobei in jedem Lattenmagazin ein von oben her zu beschickender Lattenkanal und am unteren Ende des Lattenkanals eine Einrichtung zum Ablegen von Latten vorgesehen ist. Die Lattenmagazine sind so verstellbar, dass der Abstand zwischen einander benachbarten Lattenmagazinen veränderbar ist. Zwischen einander benachbarten Lattenmagazinen ist eine die Lattenmagazine verbindende Brücke vorgesehen. Die Brücke umfasst langgestreckte Elemente und ist durch Verändern ihrer Länge an den Abstand zwischen einander benachbarten Lattenmagazinen anpassbar.

Der Erfindung liegt die Aufgabe zugrunde, das Zuführen von Latten zu Lattenmagazinen auch dann möglich zu machen, wenn zwischen Lattenmagazinen bzw. zwischen auf den Lattenmagazinen gegebenenfalls vorgesehenen Förderbahnen ein Abstand (Freiraum) vorliegt.

Gelöst wird diese Aufgabe mit einer Vorrichtung, die die Merkmale von Anspruch 1 aufweist.

Bevorzugte und vorteilhafte Ausgestaltungen der Erfindung sind Gegenstand der Unteransprüche.

Da bei der erfindungsgemäßen Vorrichtung zwischen den Lattenmagazinen eine Brücke vorgesehen ist, können den Lattenmagazinen Latten auch dann problemlos zugeführt werden, wenn zwischen den Lattenmagazinen bzw. deren Förderbahnen ein mehr oder weniger großer Abstand vorliegt. Dies, weil die Brücke den Freiraum zwischen einander benachbarten Lattenmagazinen schließt.

Da die Länge der erfindungsgemäß vorgesehenen Brücke verändert werden kann, kann die Brücke Bewegungen der Lattenmagazine folgen und sich an den Abstand (Freiraum) zwischen einander benachbarten Lattenmagazinen bzw. deren Förderbahnen anpassen. So ist bei weitgehend beliebigen Abständen einander benachbarter Lattenmagazine ein problemloses Heranfördern von Latten zu Lattenmagazinen und das Einführen von Latten in Lattenkanäle sichergestellt.

Die Brücke kann auf unterschiedliche Weise ausgebildet sein. Erfindungsgemäß wird die Brücke von langgestreckten, insbesondere biegsamen (flexiblen), Elementen gebildet. Die Elemente können Ketten, Riemen, Gurte, Seile, Bänder oder Schnüre sein.

Damit sich die Brücke aus langgestreckten Elementen an den Abstand zwischen Lattenmagazinen bzw. zwischen den Förderbahnen einander benachbarter Lattenmagazine anpassen kann, sind die langgestreckten Elemente elastisch und werden von Federn vorgespannt.

Im Rahmen der Erfindung ist in Betracht gezogen, dass die langgestreckten Elemente einen die Brücke bildenden Teil und einen zu der Feder, die sie belastet und vorspannt, führenden Teil haben.

Die Federn, welche die langgestreckten Elemente vorspannen, können Zugfedern oder pneumatische Federn sein.

Im Rahmen der Erfindung ist auch eine Ausführungsform der erfindungsgemäßen Vorrichtung in Betracht gezogen, bei der die Federn, welche die langgestreckten Elemente vorspannen, Federn sind, die Spulen, auf welchen langgestreckte Elemente aufgewickelt werden, im Sinne des Aufwickelns von langgestreckten Elementen belasten.

Um zu verhindern, dass die von Federn belasteten, langgestreckten Elemente Lattenmagazine unerwünscht bewegen und sie aus der voreingestellten Stellung ziehen, kann vorgesehen sein, dass zum Verstellen der Lattenmagazine selbsthemmende Antriebe verwendet werden. Dabei kann vorgesehen sein, dass jeder Antrieb einen Elektromotor mit einem in eine Zahnstange eingreifenden Ritzel umfasst.

In einer möglichen Ausführungsform ist vorgesehen, dass jeder Antrieb zum Verstellen der Lattenmagazine Handräder in Kombination mit Zahnstangen und einer radialen Arretierung umfasst.

Weitere Einzelheiten und Merkmale der Erfindung ergeben sich aus der nachstehenden Beschreibung eines bevorzugten Ausführungsbeispiels anhand der Zeichnungen. Es zeigt:
- Fig. 1: in Seitenansicht zwei Lattenmagazine, wobei das in der Zeichnung linke Lattenmagazin einmal in dickeren Linien und einmal - verstellt - in dünneren Linien dargestellt ist,
- Fig. 2: einen größeren Ausschnitt der Anlage aus Fig. 1, und
- Fig. 3: eine Vorrichtung mit zugeordnetem Sortierförderer.

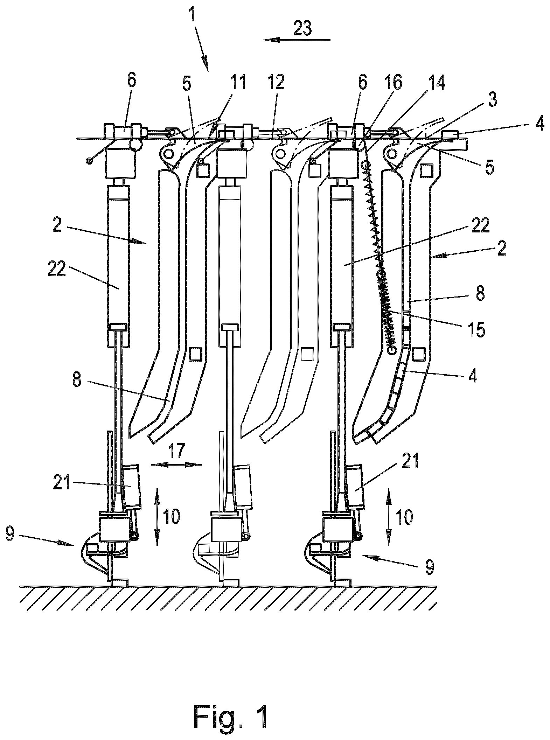

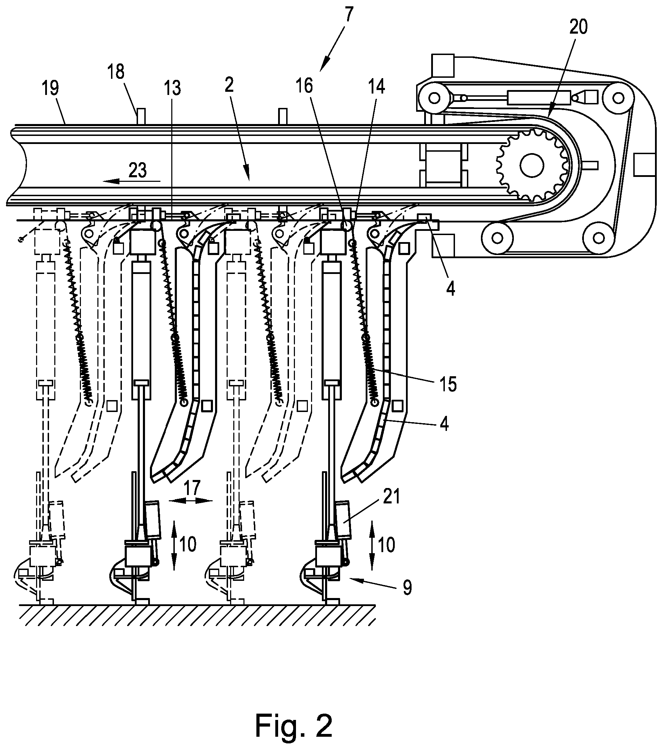

Jedes der in Fig. 1 dargestellten Lattenmagazine 2 der Vorrichtung 1 zum Legen von Latten 4 weist eine Förderbahn 3 auf. In der Förderbahn 3 ist eine Einspeisklappe 5 vorgesehen. Wenn die Einspeisklappe 5 mit Hilfe eines Linearmotors 6 (Druckmittelzylinder) hochgeschwenkt ist, fallen von einem Sortierförderer 7 (Fig. 2) auf den Förderbahnen 3 gleitend heranbewegte Latten 4 in einen Lattenkanal 8 des Lattenmagazins 2. Aus dem Lattenkanal 8 werden einzelne Latten 4 durch eine dem unteren Ende des Lattenkanals 8 zugeordnete Einrichtung 9 auf eine Lage Schnittholz abgelegt.

Wenngleich in Fig. 1 eine erfindungsgemäße Vorrichtung 1 mit nur zwei Lattenmagazinen 2 gezeigt ist, ist darauf hinzuweisen, dass die erfindungsgemäße Vorrichtung 1 in der Regel mehr als zwei Lattenmagazine 2 umfasst.

Um das Ablegen von Latten 4 an zunehmend höher werdende Schnittholzpakete anzupassen, ist die Einrichtung 9 am unteren Ende des Lattenkanals 8 in Höhenrichtung (Doppelpfeil 10) mit Hilfe eines Linearmotors 22 verstellbar.

In Fig. 1 ist das linke Lattenmagazin 2 mit dünneren Linien dem in der Zeichnung rechten Lattenmagazin 2 unmittelbar benachbart dargestellt. In dieser Stellung schließt die Förderbahn 3 des in der Zeichnung rechten Lattenmagazins 2 unmittelbar an die Förderbahn 3 des in der Zeichnung linken Lattenmagazins 2 an.

Wenn das in Fig. 1 linke Lattenmagazin 2, nachdem es in Richtung des Doppelpfeiles 17 verstellt worden ist, die in Fig. 1 mit dickeren Linien dargestellte Stellung einnimmt, ist es mit Abstand von dem in Fig. 1 rechten Lattenmagazin 2 angeordnet und zwischen den Förderbahnen 3 der einander benachbarten Lattenmagazine 2 liegt ein Freiraum vor.

Dieser Freiraum wird erfindungsgemäß durch eine Brücke 11 geschlossen, sodass Latten 4 von dem Sortierförderer 7 von der Förderbahn 3 des in der Fig. 1 rechten Lattenmagazins 2 über die Brücke 11 auf die Förderbahn 3 des in der Zeichnung linken Lattenmagazins 2 geschoben werden können.

Wenn die Einspeisklappe 5 des in der Zeichnung linken Lattenmagazins 2 geöffnet ist, gleiten herangeförderte Latten 4 in den Lattenkanal 8 des in Fig. 1 linken Lattenmagazins 2.

In dem in der Fig. 1 dargestellten Ausführungsbeispiel wird die Brücke 11 von wenigstens zwei zueinander parallel verlaufenden, langgestreckten Elementen 12, beispielsweise (Stahl-)Seilen, gebildet. Jedes langgestreckte Element 12 umfasst einen Teil 13 und einen Teil 14.

Der die Brücke 11 bildende Teil 13 ist in der Ebene der Förderbahnen 3 der Lattenmagazine 2, also mit den Förderbahnen 3 fluchtend, angeordnet und mit seinem Ende an dem in Fig. 1 linken Lattenmagazin 2 befestigt.

Der andere Teil 14 des langgestreckten Elementes 12 ist schräg nach unten in das Lattenmagazin 2 geführt und mit seinem Ende an einer Feder 15 (Zugfeder, pneumatische Feder, wie Pneumatikzylinder, oder federbelastete Aufwickelspule), die in dem in der Zeichnung rechten Lattenmagazin 2 vorgesehen ist, befestigt. Die Feder 15 belastet den in dem Lattenmagazin 2 nach einer Umlenkrolle 16 schräg nach unten führenden Teil 14 des langgestreckten Elementes 12 und damit auch den die Brücke 11 bildenden Teil 13 des langgestreckten Elementes 12. So ist das langgestreckte Element 12 vorgespannt und hält Belastungen der von ihm gebildeten Brücke 11 durch Latten stand.

Werden die zwei in Fig. 1 einander benachbarten Lattenmagazine 2 aufeinander zu oder voneinander weg (Doppelpfeil 17) verstellt, wird der in der Ebene der Förderbahnen 2 liegende Teil 13 des langgestreckten Elementes 12 unter Spannen der Feder 15 länger und unter Entspannen der Feder 15 kürzer. So wird die Länge der Brücke 11 an den Abstand zwischen einander benachbarten Lattenmagazinen 2 angepasst.

Da vorgespannte, langgestreckte Elemente 12 die Tendenz haben können, einander benachbarte Lattenmagazine 2 aufeinander zu zu bewegen, können Maßnahmen vorgesehen sein, das zu verhindern. Solche Maßnahmen können den Lattenmagazinen 2 zugeordnete Arretierungen, die Lattenmagazine in einer vorgegebenen Stellung festlegen, sein. Alternativ können die Antriebe zum Verstellen der Lattenmagazine 2 in Richtung des Doppelpfeiles 17 als selbsthemmende Antriebe ausgebildet sein. Solche Antriebe können Elektromotoren mit in Zahnstangen eingreifenden Ritzeln umfassen. Alternativ können zum Verstellen der Lattenmagazine Handräder mit Zahnstangen und radialer Arretierung verwendet werden.

Wie erwähnt, kann die erfindungsgemäße Vorrichtung 1 zum Ablegen von Latten in der Regel mehr als zwei Lattenmagazine 2 aufweisen. Wenn mehr als zwei Lattenmagazine 2 vorgesehen sind, ist zwischen einzelnen Paaren oder allen Paaren aus einander benachbarten Lattenmagazinen 2 eine Brücke 11 vorgesehen.

Fig. 2 zeigt, wie von dem Sortierförderer 7, der oberhalb der Lattenmagazine 2 vorgesehen ist, herangeförderte Latten 4 auf den Förderbahnen 3 gleitend herangefördert werden. Die Latten 4 werden durch Mitnehmer 18 des Sortierförderers 7 in Förderrichtung (Pfeil 23) bewegt. Bei hochgestellten Einspeisklappen 5 gleiten Latten 4 in die Lattenkanäle 8 der Lattenmagazine 2 hinein.

Fig. 2 zeigt, wie ein endloses, umlaufendes Glied 19, an dem die Mitnehmer 18 des Sortierförderers 7 (Lattensortierförderer) angebracht sind, mit Hilfe eines umlaufenden Riemenantriebes 20 in Bewegung versetzt wird, um Latten 4 mit Hilfe der an seinem Glied 19 vorgesehenen Mitnehmer 18 in Förderrichtung (Pfeil 23) zu bewegen und dabei Latten 4 auf den Förderbahnen 3 bzw. auf zwischen Lattenmagazinen 2 vorgesehenen Brücken 11 zu bewegen.

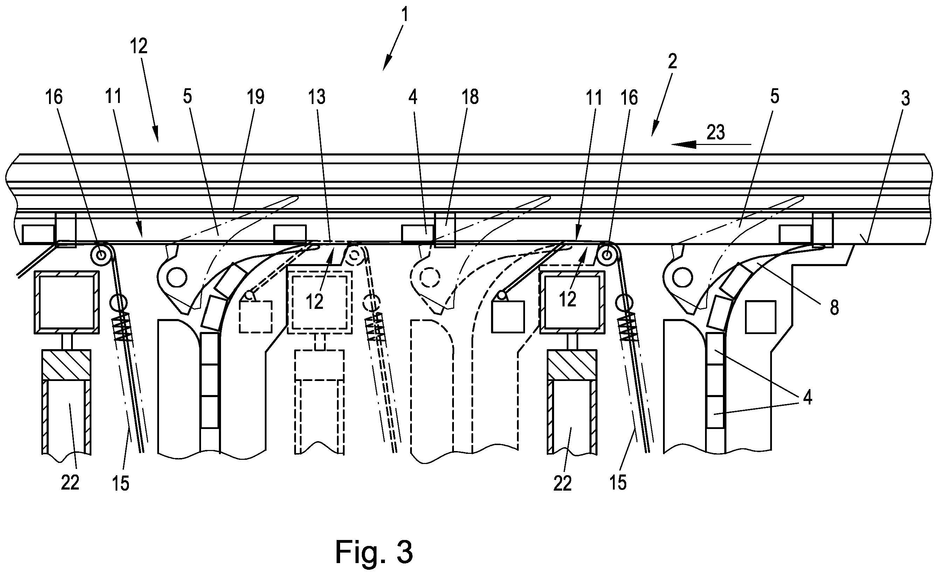

Wenn, wie in Fig. 3 dargestellt, die Einspeisklappen 5 offen sind, werden Latten 4 in Lattenkanäle 8 der Lattenmagazine 2 abgeworfen.

In Fig. 2 ist auch gezeigt, dass die am unteren Ende jedes Lattenmagazins 2 vorgesehene Einrichtung 9 zum Ablegen von Latten 4 auf eine Lage aus Schnittholz einen Ablegegreifer 21 aufweist. Der Ablegegreifer 21 ist von einem Linearmotor 22 auf und ab verstellbar (Doppelpfeil 10), sodass er in die zum Ablegen von Latten 4 auf der obersten Lage aus Schnittholz eines Schnittholzstapels entsprechende Höhenstellung bewegt werden kann.

In Fig. 2 und in Fig. 3 ist dargestellt, wie die Lattenmagazine 2, die links neben dem in Fig. 2 rechten Lattenmagazin 2 vorgesehen sind, aus einer Grundstellung (in ausgezogenen Linien dargestellt) in eine verschobene Stellung (strichliert dargestellt) bewegt werden können. In der verschobenen Stellung überbrückt die Brücke 11 den Freiraum zwischen einander benachbarten Lattenmagazinen.

Zusammenfassend kann ein Ausführungsbeispiel der Erfindung wie folgt beschrieben werden:
Eine Vorrichtung 1 zum Ablegen von Latten 4 auf eine Lage aus Schnittholz umfasst wenigstens zwei Lattenmagazine 2 mit Lattenkanälen 8, aus denen Latten 4 auf die Lage aus Schnittholz abgelegt werden. Die Latten 4 werden auf Förderbahnen 3 der Lattenmagazine 2 gleitend herangefördert. Die Lattenmagazine 2 werden horizontal verstellt (Doppelpfeil 17), damit Latten 4 richtig abgelegt werden. Zwischen einander benachbarten Lattenmagazinen 2 auftretende Freiräume werden durch Brücken 11 geschlossen. So können Latten 4 über die Brücken 11 zu nachfolgenden Lattenmagazinen 2 gefördert werden, auch wenn zwischen einander benachbarten Lattenmagazinen 2 Freiräume vorliegen.

## Patentansprüche

1. Vorrichtung (1) zum Legen von Latten (4) mit wenigstens zwei Lattenmagazinen (2), wobei in jedem Lattenmagazin (2) ein von oben her zu beschickender Lattenkanal (8) und am unteren Ende des Lattenkanals eine Einrichtung (9) zum Ablegen von Latten (4) vorgesehen ist, und wobei Lattenmagazine (2) so (Pfeil 17) verstellbar sind, dass der Abstand zwischen einander benachbarten Lattenmagazinen (2) veränderbar ist, wobei zwischen einander benachbarten Lattenmagazinen (2) eine die Lattenmagazine (2) verbindende Brücke (11), die zwischen einander benachbarten Lattenmagazinen (2) auftretende Freiräume schließt, vorgesehen ist, wobei die Brücke (11) durch Verändern ihrer Länge an den Abstand zwischen einander benachbarten Lattenmagazinen (2) anpassbar ist und wobei die Brücke (11) wenigstens zwei langgestreckte Elemente (12) umfasst, **dadurch gekennzeichnet, dass** die langgestreckten Elemente (12) durch Federn (15) vorgespannt sind.

2. Vorrichtung nach Anspruch 1, wobei jedes Lattenmagazin (2) eine Förderbahn (3) für dem Lattenmagazin (2) zuzuführende Latten (4) aufweist, **dadurch gekennzeichnet, dass** die Brücke (11) zwischen den Förderbahnen (3) einander benachbarter Lattenmagazine (2) diese verbindend vorgesehen ist und dass die Brücke (11) an den Abstand zwischen den Förderbahnen (3) einander benachbarter Lattenmagazine (2) anpassbar ist.

3. Vorrichtung nach Anspruch 1 oder 2, **dadurch gekennzeichnet, dass** die langgestreckten Elemente (12) flexibel sind.

4. Vorrichtung nach Anspruch 3, **dadurch gekennzeichnet, dass** die Brücke (11) als flexible, langgestreckte Elemente (12) Ketten, Riemen, Gurte, Bänder, Seile oder Schnüre umfasst.

5. Vorrichtung nach einem der Ansprüche 1 bis 4, **dadurch gekennzeichnet, dass** die langgestreckten Elemente (12) zueinander im Wesentlichen parallel ausgerichtet sind.

6. Vorrichtung nach einem der Ansprüche 1 bis 5, **dadurch gekennzeichnet, dass** die langgestreckten Elemente (12) elastisch sind.

7. Vorrichtung nach einem der Ansprüche 1 bis 6, **dadurch gekennzeichnet, dass** die Federn (15) Zugfedern, pneumatische Federn oder Aufwickelspulen im Sinne des Aufwickelns langgestreckter Elemente (12) belastende Federn sind.

8. Vorrichtung nach einem der Ansprüche 2 bis 7, **dadurch gekennzeichnet, dass** die Brücken (11) in der Höhe der Förderbahnen (3) an der Oberseite der Lattenmagazine (2) vorgesehen sind.

9. Vorrichtung nach einem der Ansprüche 1 bis 7, **dadurch gekennzeichnet, dass** die langgestreckten Elemente (12) einen von der Feder (15) zur Förderbahn (3) hinführenden Teil (14) und einen mit der Förderbahn (3) fluchtenden, die Brücke (11) bildenden, Teil (13) umfassen.

10. Vorrichtung nach Anspruch 7 oder 8, **dadurch gekennzeichnet, dass** die Federn (15) in einem Lattenmagazin (2) angeordnet sind.

11. Vorrichtung nach Anspruch 10, **dadurch gekennzeichnet, dass** ein Ende jedes langgestreckten Elementes (12) an der ihm zugeordneten Feder (15) oder der Aufwickelspule und das andere Ende jedes langgestreckten Elementes (12) an dem benachbarten Lattenmagazin (2), insbesondere in dem Bereich seiner Förderbahn (3), befestigt ist.

12. Vorrichtung nach einem der Ansprüche 9 bis 11, **dadurch gekennzeichnet, dass** in dem Lattenmagazin (2), in welchem die Federn (15) vorgesehen sind, eine Umlenkrolle (16) für das langgestreckte Element (12) vorgesehen ist.

## Claims

1. Device (1) for laying slats (4) comprising at least two slat magazines (2), wherein in each slat magazine (2) a slat channel (8) to be loaded from above and, at the lower end of the slat channel, a device (9) for depositing slats (4) are provided, and wherein slat magazines (2) are adjustable (arrow 17) such that the distance between mutually adjacent slat magazines (2) is variable, wherein between mutually adjacent slat magazines (2) a bridge (11) connecting the slat magazines (2) is provided, which bridge closes clearances occurring between mutually adjacent slat magazines (2), wherein the bridge (11) is adaptable to the distance between mutually adjacent slat magazines (2) by changing its length, and wherein the bridge (11) comprises at least two elongated elements (12), **characterized in that** the elongated elements (12) are pretensioned by springs (15).

2. Device according to claim 1, wherein each slat magazine (2) has a conveyor track (3) for slats (4) to be fed to the slat magazine (2), **characterized in that** the bridge (11) is provided between the conveyor tracks (3) of mutually adjacent slat magazines (2) connecting them, and **in that** the bridge (11) is adaptable to the distance between the conveyor tracks (3) of mutually adjacent slat magazines (2).

3. Device according to claim 1 or 2, **characterized in that** the elongated elements (12) are flexible.

4. Device according to claim 3, **characterized in that** the bridge (11) comprises, as flexible, elongated elements (12), chains, belts, straps, bands, ropes, or cords.

5. Device according to one of claims 1 to 4, **characterized in that** the elongated elements (12) are oriented substantially parallel to one another.

6. Device according to one of claims 1 to 5, **characterized in that** the elongated elements (12) are elastic.

7. Device according to one of claims 1 to 6, **characterized in that** the springs (15) are tension springs, pneumatic springs, or springs loading winding spools in the sense of winding up elongated elements (12).

8. Device according to one of claims 2 to 7, **characterized in that** the bridges (11) are provided at the height of the conveyor tracks (3) on the upper side of the slat magazines (2).

9. Device according to one of claims 1 to 7, **characterized in that** the elongated elements (12) comprise a part (14) leading from the spring (15) to the conveyor track (3) and a part (13) aligned with the conveyor track (3) and forming the bridge (11).

10. Device according to claim 7 or 8, **characterized in that** the springs (15) are arranged in a slat magazine (2).

11. Device according to claim 10, **characterized in that** one end of each elongated element (12) is fastened to the spring (15) associated therewith or to the winding spool, and the other end of each elongated element (12) is fastened to the adjacent slat magazine (2), in particular in the region of its conveyor track (3).

12. Device according to one of claims 9 to 11, **characterized in that** a deflection pulley (16) for the elongated element (12) is provided in the slat magazine (2) in which the springs (15) are provided.

## Revendications

1. Dispositif (1) pour la pose de lattes (4) comprenant au moins deux magasins de lattes (2), dans lequel est prévu dans chaque magasin de lattes (2) un conduit de lattes (8) qui doit être alimenté par le haut et, à l'extrémité inférieure du conduit de lattes, une installation (9) pour la pose de lattes (4), et dans lequel des magasins de lattes (2) peuvent être déplacés (flèche 17) de telle sorte que la distance entre des magasins de lattes (2) voisins les uns des autres soit modifiable, dans lequel un pont (11) reliant les magasins de lattes (2) entre eux et fermant des espaces libres formés entre des magasins de lattes (2) voisins les uns des autres est prévu entre les magasins de lattes (2) voisins les uns des autres, lequel pont (11) peut être adapté par une modification de sa longueur à la distance entre des magasins de lattes (2) voisins les uns des autres et lequel pont (11) comprend au moins deux éléments allongés (12), **caractérisé en ce que** les éléments allongés (12) sont précontraints par des ressorts (15).

2. Dispositif selon la revendication 1, dans lequel chaque magasin de lattes (2) comporte une piste de transport (3) pour des lattes (4) à amener au magasin de lattes (2), **caractérisé en ce que** le pont (11) est prévu entre les pistes de transport (3) de magasins de lattes (2) voisins les uns des autres et relie celles-ci et **en ce que** le pont (11) peut être adapté à la distance entre les pistes de transport (3) de magasins de lattes (2) voisins les uns des autres.

3. Dispositif selon la revendication 1 ou 2, **caractérisé en ce que** les éléments allongés (12) sont flexibles.

4. Dispositif selon la revendication 3, **caractérisé en ce que** le pont (11) comprend, comme éléments allongés (12) flexibles, des chaînes, des courroies, des sangles, des bandes, des câbles ou des cordons.

5. Dispositif selon l'une des revendications 1 à 4, **caractérisé en ce que** les éléments allongés (12) sont orientés de façon sensiblement parallèle les uns aux autres.

6. Dispositif selon l'une des revendications 1 à 5, **caractérisé en ce que** les éléments allongés (12) sont élastiques.

7. Dispositif selon l'une des revendications 1 à 6, **caractérisé en ce que** les ressorts (15) sont des ressorts de traction, des ressorts pneumatiques ou des ressorts contraignant des bobines d'enroulement en vue de l'enroulement d'éléments allongés (12).

8. Dispositif selon l'une des revendications 2 à 7, **caractérisé en ce que** les ponts (11) sont prévus à la hauteur des pistes de transport (3) sur la face supérieure des magasins de lattes (2).

9. Dispositif selon l'une des revendications 1 à 7, **caractérisé en ce que** les éléments allongés (12) comprennent une partie (14) menant du ressort (15) à la piste de transport (3) et une partie (13) alignée avec la piste de transport (3) et formant le pont (11).

10. Dispositif selon la revendication 7 ou 8, **caractérisé en ce que** les ressorts (15) sont disposés dans un magasin de lattes (2).

11. Dispositif selon la revendication 10, **caractérisé en ce qu'**une extrémité de chaque élément allongé (12) est fixée au ressort (15) qui lui est associé ou à la bobine d'enroulement et l'autre extrémité de chaque élément allongé (12) est fixée au magasin de lattes (2) voisin, en particulier dans la région de sa piste de transport (3).

12. Dispositif selon l'une des revendications 9 à 11, **caractérisé en ce qu'**un galet de renvoi (16) pour l'élément allongé (12) est prévu dans le magasin de lattes (2) dans lequel les ressorts (15) sont prévus.
